# EUROPEAN PATENT APPLICATION

(11) **EP 4 793 135 A1**
(43) Date of publication of application: **19.08.2026**
(21) Application number: 25221045.5
(22) Date of filing: 05.12.2025
(51) Int. Cl.: B62D 1/12

(54) **DYNAMICALLY STABLE ERGONOMIC CONTROL FOR MATERIALS-HANDLING VEHICLE**

(30) Priority: 14.02.2025 US 202563758563 P; 30.04.2025 US 202519194523
(71) Applicant: Hyster-Yale Materials Handling, Inc., Fairview, OR 97024 (US)
(72) Inventor: DENDY, Tanner Reese, Greenville, NC (US); HOFFMAN, Matthew Kenneth, Greenville, NC (US); LANCASTER, Justin Bryant, Pikeville, NC (US); CURRIN, Christopher Paul, Greenville, NC (US)
(74) Representative: Forresters IP LLP

(57) **Abstract**

An operator control device (100, 1100) for a materials-handling vehicle (50) includes an ergonomic handle (100, 1100) rotatably mounted on a support structure (102, 1130) secured to the vehicle (50) in a fixed position. The ergonomic handle (1100) can include left and right handles (1120, 1110). Each handle (110, 1110, 1120) comprises an upper surface (114) contoured to ergonomically support an operator's hand (22). Clockwise and counterclockwise rotation of the control device (1100) produces a steering input used to steer the vehicle (50). A thumb-operated switch (1112, 1122) can be arranged on the right or left handle (1110, 1120) to control lift operations and a separate thumb-operated switch (1112, 1122) can be arranged on the opposite handle (1110, 1120) to control a speed of the vehicle (50). Each switch (1112, 1122) can be operated without requiring the operator (20) to move his/her hand (22) from an operating position. Dynamic stability is provided by enabling an operator (20) to use the handle (110, 1100) to provide a bracing force during operation of the vehicle (50).

## Description

### PRIORITY CLAIM

This application claims priority to U.S. Patent Application No. 19/194,523, entitled "DYNAMICALLY STABLE ERGONOMIC CONTROL FOR MAN-UP LIFT TRUCK," filed April 30, 2025, the entire disclosure of which is incorporated by reference herein.

### RELATED APPLICATIONS

U.S. Patent Application No. 19/194,523 claimed priority under 35 U.S.C. § 119 to U.S. Provisional Patent Application No. 63/758,563, entitled "DYNAMICALLY STABLE ERGONOMIC CONTROL FOR MAN-UP LIFT TRUCK," filed February 14, 2025. U.S. Patent Application No. 19/194,523 is also a Continuation-in-Part of and claims the benefit under 35 U.S.C. § 120 of each of the following: (1) U.S. Patent Application No. 18/884,498, entitled "DYNAMICALLY STABLE ERGONOMIC CONTROL FOR MAN-UP LIFT TRUCK," filed September 13, 2024, and (2) U.S. Design Patent Application No. 29/977,679, entitled "CONTROL HANDLE FOR A MATERIALS-HANDLING VEHICLE," filed December 10, 2024. The entire disclosures of these patent applications are also incorporated herein by reference.

### TECHNICAL FIELD

This disclosure relates generally to operator controls for materials-handling vehicles. More specifically, this disclosure relates to speed (or throttle) and lift controls for a man-up lift truck, also referred to as a high-level order selector or order picker. This disclosure also relates to steering, speed (or throttle), lift, and other controls for a materials-handling vehicle, including, for example, a man-up lift truck and a low-level order selector (or "picker").

### BACKGROUND INFORMATION

Conventional man-up lift trucks have been unable to provide consistent-feeling dynamic stability for an operator (also referred to as a "user") while providing convenient access to both speed and lift controls. Conventional materials-handling vehicles also have not provided ergonomic controls that place primary operator controls all within easy and convenient reach of the operator while steering the vehicle. Conventional controls have also lacked intuitive steering controls and calibrated responsiveness to driving inputs.

### SUMMARY OF DISCLOSURE

It would be beneficial to provide controls for a materials-handling vehicle, such as an order selector, that provide ergonomic left and right handles along with convenient access to primary control features and intuitive control of the driving functions of the materials-handling vehicle. It would also be beneficial to have an intuitive driving control system that is adaptable to control driving outputs based on driving inputs and other vehicle operation characteristics.

According to an embodiment, ergonomic left and right control handles can be provided on a yoke-style steering device for an order selector (or other materials handling vehicle) to provide intuitive driving control and to efficiently manage other operations of the order selector. This control system can be referred to as a "Fork-Lift Yoke Technology" or "FLYT" control system.

According to an embodiment, control input devices such as buttons, switches, toggles, or other control features can be located on the left and right control handles within easy reach of a user's fingers and thumbs to provide easy and convenient simultaneous access to control primary and/or auxiliary functions of the order selector without requiring movement of a user's hands from a driving position on the handles.

According to an embodiment, an electrical steering system can take steering input from the control handles and transfer a steering input signal to a steering system of the vehicle control system to control turning operations of the vehicle.

According to an embodiment, the control handles can rotate together about a steering axis by up to about 45 degrees in either direction (clockwise and counterclockwise) and control a vehicle turn of up to about 90 degrees in either direction (right and left).

According to an embodiment, the steering system can provide variable steering to the order selector based on steering inputs and other operating factors. Among other things, a non-linear vehicle turn response to steering inputs can be enabled.

According to an embodiment, small steering inputs can result in small responses from the steering system with larger steering inputs resulting in proportionally greater responses.

According to an embodiment, the steering system responses to steering inputs can depend on a variety of vehicle operation factors, including, for instance, the speed of the vehicle, a height of vehicle forks, a vehicle load, and other factors. The steering system responses can further be customizable based on customer needs or preferences.

According to an embodiment, faster driving speeds result in slower turns and slower driving speeds enable faster turns. In other words, slower vehicle speeds can enable an increased turn response from the steering system to a same steering input as compared to faster vehicle speeds.

According to an embodiment, increased fork height can limit an operational speed of a materials-handling vehicle and therefore indirectly control a turn response of the vehicle. Alternatively, fork height can be used to directly affect a turn response of the vehicle by limiting a turn response in relationship to increased fork heights.

According to an embodiment, excessive steering inputs cause a materials-handling vehicle to reduce vehicle speed to a level appropriate for that steering input. Once the speed has been reduced to an appropriate level for the steering input, the vehicle can turn by an amount proportional to the steering input.

According to an embodiment, wire guidance can be provided to enable the vehicle to travel along a path specified by a cable located in a floor aisle.

According to an embodiment, a vehicle control system can be provided with customizable configuration files to allow customization of steering responses for individual customers. This customization can, for instance, include variable output steering control tables to control the turning characteristics of the vehicle based on different operating parameters.

Additional aspects and advantages will be apparent from the following detailed description of example embodiments, which proceeds with reference to the accompanying drawings.

### BRIEF DESCRIPTION OF THE DRAWINGS

The foregoing and additional objects, features, and advantages of the present inventive concepts will become more readily apparent from the following detailed description of preferred embodiments, depicted in the attached drawings, in which:
Figure 1A is an isometric illustration of a man-up lift truck being operated at ground level.
Figure 1B is an isometric illustration of a man-up lift truck being used to pick items from a rack at a high level.
Figure 2 is an isometric illustration of operator control devices for controlling direction, speed, and lift of a man-up lift truck according to principles of the present inventive concepts.
Figure 3A is a front-right isometric illustration of an operator control device for controlling speed and lift of a man-up lift truck according to one embodiment.
Figure 3B is a rear-left isometric illustration of the operator control device of Figure 3A.
Figure 3C is a right side view illustrating various operational positions of the operator control device of Figure 3A.
Figure 4 is a left isometric illustration showing a positioning of an operator's hand on the operator control device of Figure 3A.
Figure 5 is a left front isometric illustration further showing a positioning of an operator's fingers on a lower portion of the operator control device of Figure 3A.
Figures 6A-6C are right isometric illustrations showing a user positioning the operator control device of Figure 3A in various operating positions.
Figure 7 is a right isometric illustration showing a movement angle of an operator's wrist between the forward and reverse operating positions of the operator control device of Figure 3A.
Figures 8A and 8B illustrate bracing forces operating on a user during a stopping or reverse operation of a lift truck.
Figures 9A and 9B illustrate bracing forces operating on a user during a forward operation of a lift truck.
Figure 10 is a schematic illustration of a man-up lift truck operator.
Figure 11 is a somewhat schematic illustration showing the location of the operator control device of Figure 3A within a man-up lift truck according to one embodiment.
Figure 12 is a right side view illustrating the location of a pivot point in relation to a user's hand in the operator control device of Figure 3A arranged in a neutral position according to one embodiment.
Figure 13 is a right side view further illustrating the location of the pivot point in relation to a user's hand in the operator control device of Figure 3A arranged in a forward position.
Figure 14 is a right top isometric illustration showing the location of thumb and finger controls in relation to a user's hand in the operator control device of Figure 12.
Figure 15 is a left-rear isometric view of an operator control device for controlling speed and lift of a man-up lift truck, according to one embodiment.
Figure 16 is a right-front isometric view of the operator control device of Figure 15.
Figure 17 is a top view of the operator control device of Figure 15.
Figure 18 is a right side view of the operator control device of Figure 15.
Figure 19 is a left side view of the operator control device of Figure 15.
Figure 20 is a rear side view of the operator control device of Figure 15.
Figure 21 is a front side view of the operator control device of Figure 15.
Figure 22 is a top-front isometric view of a steering control handle for an order selector (or other materials handling vehicle) according to one embodiment.
Figure 23 is a right-front-top isometric view of the control handle of Figure 22.
Figure 24 is a left-rear-bottom isometric view of the control handle of Figure 22.
Figure 25 is a left-rear isometric view of an order selector having the control handle of Figure 22, according to one embodiment.
Figure 26 is a right-rear isometric view of an order selector having the control handle of Figure 22, according to one embodiment.
Figure 27 is a block diagram of an electrical steering system and vehicle control system according to one embodiment.
Figures 28A and 28B are a top view of a control handle and top view of an order selector, respectively, illustrating a left turn operation of an order selector using the control handle of Figure 1, according to one embodiment.
Figures 29A and 29B are a top view of a control handle and top view of an order selector, respectively, illustrating a right turn operation of an order selector using the control handle of Figure 22, according to one embodiment.
Figure 30 is a graph illustrating a variable output steering function for the steering system depending on a travel speed of the order selector according to one embodiment.

### DETAILED DESCRIPTION OF EMBODIMENTS

### Preliminary Notes

Example embodiments are described below with reference to the accompanying drawings. Unless otherwise expressly stated, the sizes, positions, etc., of components, features, elements, etc., as well as any distances therebetween, are not necessarily to scale, and may be disproportionate and/or exaggerated for clarity.

The embodiments described herein are merely examples, set forth by way of illustration only and not limitation. Those skilled in the art will recognize in light of the teachings herein that there are alternatives, variations and equivalents to the example embodiments described herein and their component parts. For example, other embodiments are readily possible, variations can be made to the embodiments described herein, and there may be equivalents to the components, parts, or steps that make up the described embodiments.

For the sake of clarity and conciseness, certain aspects of components or steps of certain embodiments are presented without undue detail where such detail would be apparent to those skilled in the art in light of the teachings herein and/or where such detail would obfuscate an understanding of more pertinent aspects of the embodiments.

The terminology used herein is for the purpose of describing particular example embodiments only and is not intended to be limiting. As used herein, the singular forms "a," "an" and "the" are intended to include the plural forms as well, unless the context clearly indicates otherwise. It should be recognized that the terms "comprise," "comprises," "comprising," "include," "includes," "including," "has," "have," and "having," when used in this document, are open-ended and specify the presence of stated features, integers, steps, operations, elements, and/or components, but do not preclude the presence or addition of one or more other features, integers, steps, operations, elements, components, and/or groups thereof. Unless otherwise specified, a range of values, when recited, includes both the upper and lower limits of the range, as well as any sub-ranges therebetween. Unless indicated otherwise, terms such as "first," "second," etc., are only used to distinguish one element from another and not to imply any relative order, placement, or ranking. For example, one element could be termed a "first element" and similarly, another element could be termed a "second element," or vice versa. The same is true of labels like (a), (b), (c) or (1), (2), (3), etc. The section headings used herein are for organizational purposes only and are not to be construed as limiting the subject matter described.

Unless indicated otherwise, the terms "about," "thereabout," "substantially," etc. mean that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art.

Spatially relative terms, such as "right," left," "below," "beneath," "lower," "above," and "upper," and the like, may be used herein for ease of description to describe one element's or feature's relationship to another element or feature, as illustrated in the drawings. It should be recognized that the spatially relative terms are intended to encompass different orientations in addition to the orientation depicted in the drawings. For example, if an object in the figures is turned over, elements described as "below" or "beneath" other elements or features would then be oriented "above" the other elements or features. Thus, the term "below" can, for example, encompass both an orientation of above and below. An object may be otherwise oriented (e.g., rotated 90 degrees or at other orientations) and the spatially relative descriptors used herein may be interpreted accordingly.

Unless clearly indicated otherwise, all functional or operative connections may be direct or indirect. Similarly, unless clearly indicated otherwise, all physical connections may be rigid or non-rigid, permanent or temporary, direct or indirect (e.g., via intermediary components).

Like numbers refer to like elements throughout. Thus, the same or similar numbers may be described with reference to other drawings even if they are neither mentioned nor described in the corresponding drawing. Also, even elements that are not denoted by reference numbers may be described with reference to other drawings. Additionally, the drawings may include non-essential elements that are included only for the sake of thoroughness. These non-essential elements may be removed entirely or left only in outline form if drawing changes are desired to create greater clarity.

Not every feature shown in every drawing is labeled with a reference number, even though the same feature may be labeled with a reference number on other drawings. Reference numbers have been omitted where it is believed they would unnecessarily clutter a drawing. However, all rights are reserved to add reference numbers to the drawings to clarify aspects of the embodiments. Moreover, some views omit some features shown in other views. Finally, the drawings sometimes illustrate variations from one drawing to another, even where those drawings are intended to depict the same embodiment.

### Overview

Order selectors or pickers permit a truck operator to move around a warehouse or similar facility and pick items from the warehouse or place items in the warehouse. Because warehouses generally provide narrow aisles and various obstacles to driving, the operator appreciates an intuitive way to operate the vehicle between and around obstacles, with convenient controls to steer and operate other features of the order selector. Because operators typically work several-hour shifts, ergonomic and stable controls are also desirable to reduce fatigue. Although usable in many types of materials-handling vehicles, the principles described herein are especially beneficial for fore-aft vehicle applications, where the forks are arranged at a front or rear of the vehicle.

Man-up lift trucks (which may be order selectors or pickers) permit a truck operator to move around a warehouse or similar facility and move vertically up and down to pick items from shelving units or racks. Because the operator may need to operate the lift truck from a significant height, both actual and perceived stability during truck operation are desirable.

According to principles described herein, an operator control device is provided which enhances dynamic stability during operation of a man-up lift truck. According to one embodiment, the operator control device provides one-handed control of truck speed and braking control along with up and down movement of the lift.

According to one embodiment, an operator control device provides wrist-activated throttle control of speed and braking along with thumb-activated control of the hydraulic lift. The operator control device comprises an ergonomically shaped handle configured to comfortably fit the hand contours of the average user's (e.g., 95th percentile) right (or left) hand. The handle is pivotably mounted on a support stem that is attached to the lift truck at a desired height. The desired height can be selected so as to be most comfortable for an average user. A biasing member, such as a spring or other biasing mechanism orients the handle in a neutral position. The pivot point can be arranged through a stability vector of the operator to provide dynamic stability during movement of the truck. The design can further optimize use of large muscle groups for the repetitive motions to reduce operator stress and to enhance comfort. And the design can be configured such that the bracing force does not impart a rotational force to the handle.

In operation, as a user straightens his or her wrist, the handle is rotated in a clockwise direction around the pivot point to initiate a forward movement of the lift truck. To stop the lift truck, the operator bends the control hand upwards (cupping the wrist) to rotate the handle counter-clockwise around the pivot point. Continued holding of the handle in the rotated upwards position after stopping can operate the lift truck in reverse.

According to one embodiment, a thumb control is arranged on the handle so as to be proximal to a user's thumb. The thumb control can be a switch, button, or combination of controls that permit operation of the lift using the operator's thumb or other finger. In one embodiment, the thumb control is a rocker switch biased in a neutral position proximal to a user's thumb. Pushing the upper or top portion of the switch causes the lift to move upwards. Pushing the lower or bottom portion of the switch causes the lift to move downwards. Releasing the switch causes the lift to maintain its current height. By arranging the lift control switch in proximity to a user's thumb (or other finger), the up and down movement of the platform can be controlled at the same time the truck is being operated in a forward or reverse direction and using the same hand.

According to an embodiment, an operator control device for a man-up lift truck can include a handle pivotably arranged on a support structure so as to pivot about a pivot point, wherein said support structure is configured to be secured to the man-up lift truck such that a horizontal and a vertical position of the pivot point is substantially fixed with respect to the lift truck during operation of the man-up lift truck. The handle can include an upper surface contoured to ergonomically support a hand of an operator with an operator's wrist arranged substantially directly above the pivot point. The handle can further provide dynamic stability to the operator by permitting the operator to use the handle to provide a bracing force during forward, plugging, and reverse operations of the man-up lift truck. The bracing force can be directed through an axis of the pivot point. The bracing force can also be directed through an arm and large muscle groups (such as shoulder muscles) of the operator. The handle can further be designed such that the bracing force does not impart a rotational force to the handle.

According to principles described herein, a steering control handle is provided which enhances ergonomics and operational intuitiveness of an order selector or other materials-handling vehicle (also referred to as a "truck"). According to one embodiment, the control handle provides a yoke-style steering control of a truck. A steering system translates rotation of the control handle about a steering axis into variable steering control of the truck. The control handle can also provide convenient speed and braking control as well as control over up and down movement of the lift and other vehicle features. This control system can be referred to as a "Fork-Lift Yoke Technology" or "FLYT" control system.

According to an embodiment, an operator control device for a materials handling vehicle includes a yoke-style steering device rotatably arranged on a support structure so as to rotate about a steering axis. The support structure is configured to be secured to the vehicle. The yoke-style steering device comprises ergonomic left and right handles, each comprising an upper surface contoured to comfortably support a hand of an operator. An electrical steering system is configured to produce a steering input signal based on an amount by which the yoke-style steering device is rotated about the steering axis, and the steering input signal is configured to be sent to a vehicle control system to control an amount of vehicle turn based on the steering input signal.

According to an embodiment, the vehicle control system comprises a steering control system configured to produce a steering output signal controlling the amount of vehicle turn in response to the steering input signal, wherein the steering output signal has a non-linear relationship to the steering input signal.

### First Example Embodiment Illustrated in the Drawings

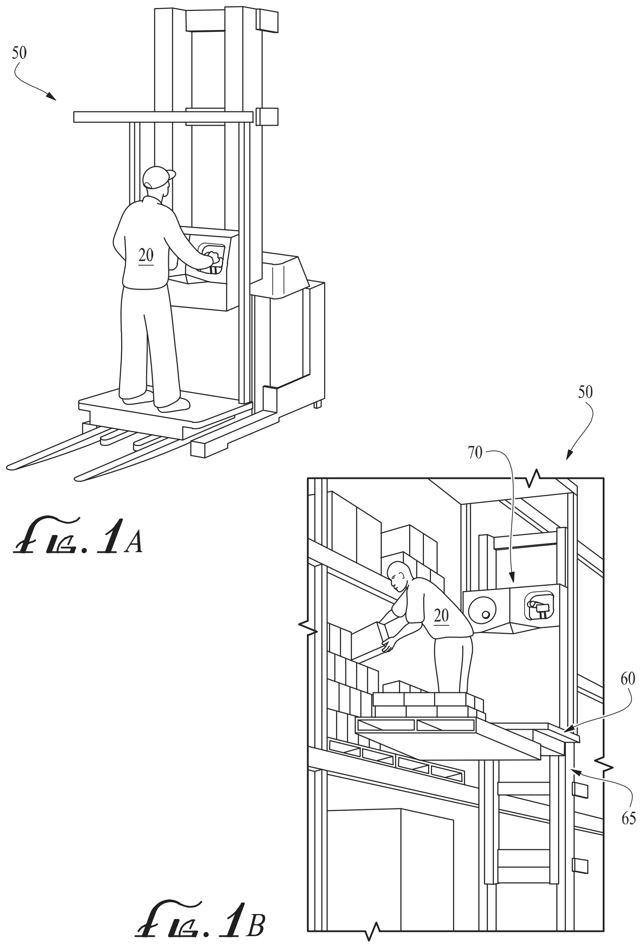

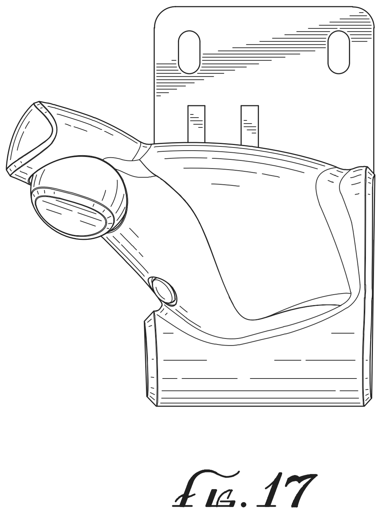

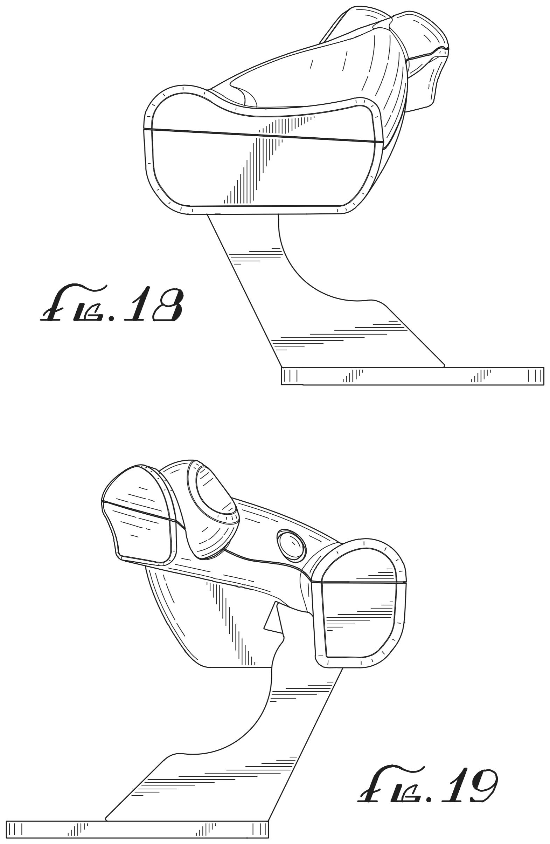

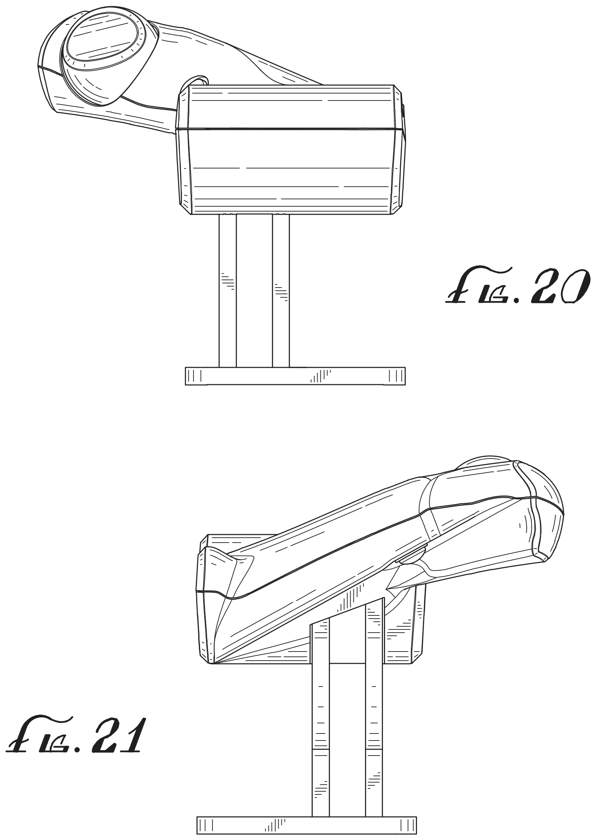

A first example embodiment is illustrated in Figures 1A-21.

Figures 1A and 1B illustrate a man-up lift truck 50 being operated by an operator 20 to select and pick items from a warehouse rack. Referring to Figures 1A and 1B, a man-up lift truck 50 can be maneuvered around a warehouse to select and pick items from various levels of a rack or to place items on the racks. As used herein, the term "pick" in its various forms should also be understood to mean "place." Referring specifically to Figure 1B, a platform 60 can be arranged on a lift 65 of the lift truck 50 so as to raise and lower an operator 20 to a level of the desired item for picking. The lift 65 may be hydraulically powered, electrically powered, or powered by other means. The lift truck 50 can be driven with the platform 60 raised. However, it is desirable that controls 70 be included that provide dynamic stability (meaning that the operator has at least three points of contact with the lift truck 50 to maintain the operator's stability) during operation of the lift truck 50, particularly when the platform 60 is elevated.

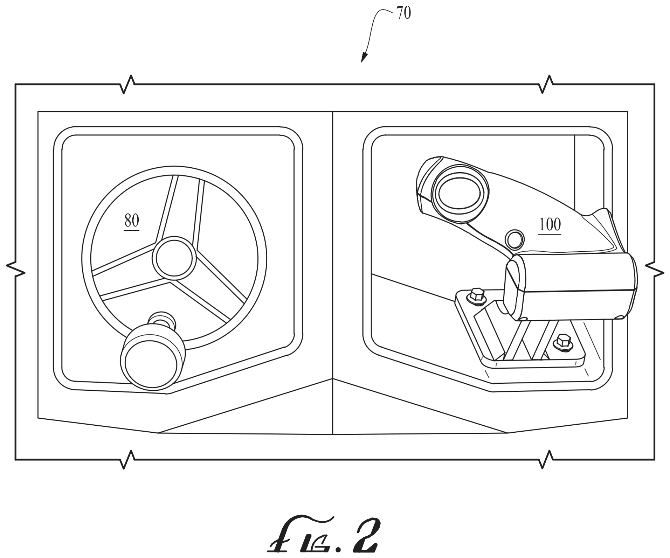

Figure 2 illustrates operator control devices 80 and 100, respectively, arranged in an operator control panel 70 of the lift truck 50 for controlling direction as well as speed and lift height of the man-up lift truck 50 according to one embodiment. Referring to Figure 2, a turning wheel 80 can be provided on the left (or right) of the operator panel 70 to control a direction of travel of the lift truck 50. An operator control device 100 can be provided on the right (or left) of the operator panel 70 to control the forward speed, reverse speed, and plugging of the lift truck 50 as well as a height of the lift 65 and the operator platform 60.

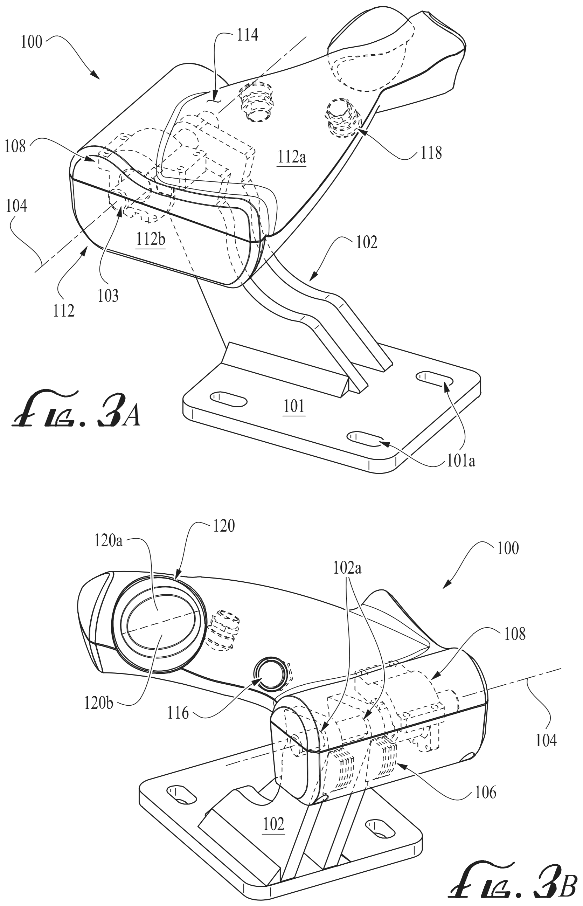

Figures 3A-14 illustrate the construction and operation of an operator control device 100 of a man-up lift truck 50 according to one embodiment. Referring initially to Figures 3A-3C, an operator control device 100 comprises an ergonomically configured handle 110 pivotably mounted on a support stem 102 extending from a base plate 101. The base plate 101 can be connected to a frame or other mounting surface of the lift truck 50, for instance using bolts secured through one or more base holes 101a. The handle 110 is configured to pivot forward (clockwise) and backward (counter-clockwise) up to a desired angle α, β, respectively, around a pivot point (axis) 104. The desired angle α, β, can, for instance, be approximately about 15 degrees in each direction (clockwise α and counter-clockwise β) and approximately about 30 degrees maximum pivot θ around the pivot point 104. A rod 103 extending through holes 102a in the support stem 102 can provide a hinge mechanism that permits the handle 110 to pivot about the pivot point 104.

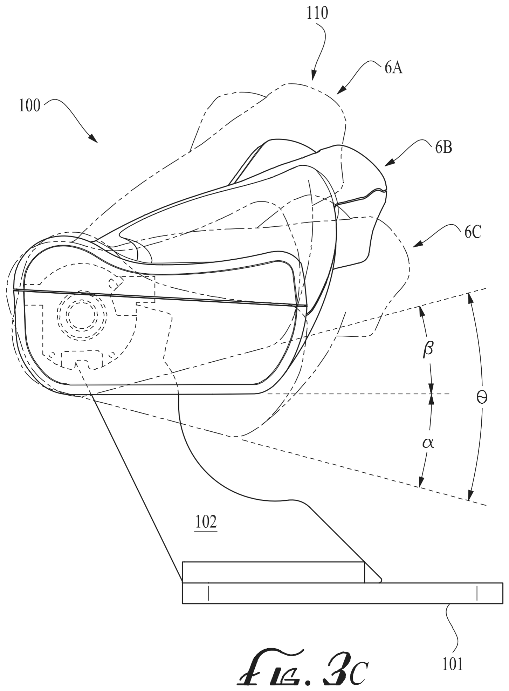

The handle 110 is preferably biased in a neutral position 6B (Fig. 3C) by a biasing mechanism 106 such as a torsion or rotational spring. A potentiometer (or other position detecting device) 108 can be arranged in the handle 110 to detect a degree of pivot about the pivot point 104 and to produce a corresponding signal. Signals from the position detecting device can be sent to a control center of the lift truck 50, such as a vehicle system manager or other suitable controller, to control the operation of the lift truck 50. Forward (clockwise) rotation of the hand can move the handle 110 into a forward position 6C (Fig. 3C), and rearward (counter-clockwise) rotation of the hand can move the handle 110 into a reverse/plugging position 6A (Fig. 3C).

The handle 110 can comprise a housing 112 formed from an upper and a lower shell 112a, 112b, respectively. The upper and lower shells 112a, 112b can be connected together using threaded screws, snap-fit connection members, press-fit connection members, adhesive, or any other desired mechanical and/or chemical connection. The housing 112 can contain the internal components, circuitry, sensors, switches, buttons, and wiring for performing the handle 110 functions.

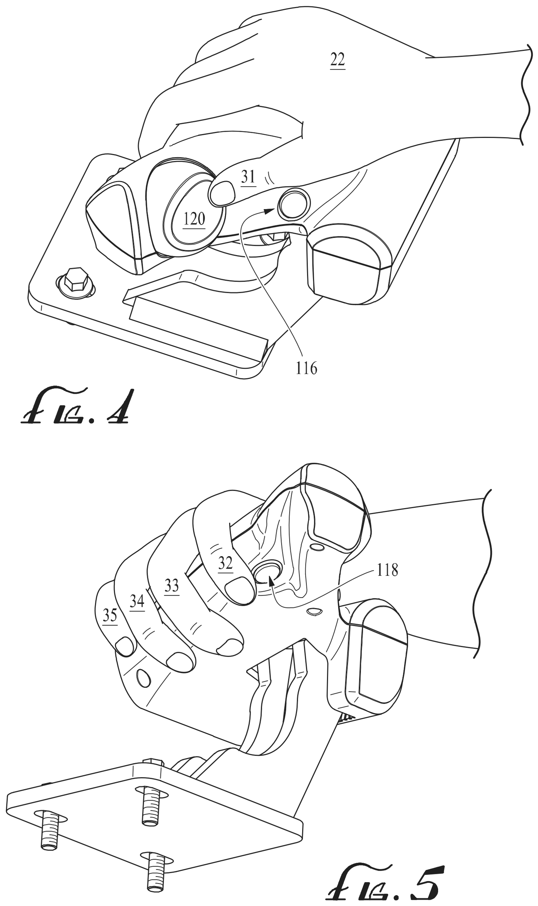

The upper shell 112a preferably comprises an ergonomically-shaped upper surface 114 contoured to comfortably support a user's hand 22 (see Figures 4-6C). Buttons 116, 118, such as an auxiliary button 116 and a horn button 118 can be arranged along the housing 112 in proximity to a user's fingers 32, 33, 34, 35 or thumb 31 to permit easy one-handed operation of the horn and auxiliary functions during operation of the lift truck 50. The auxiliary button 116 can, for instance, be arranged proximal to a user's thumb 31 while the horn button 118 may be arranged proximal to a user's index finger 32. Additional or alternative buttons (not shown) may be provided along the housing 112 in proximity to the user's fingers 31-35 to activate different functions. Although the illustrated embodiment shows a user's right hand, a left-handed model is, of course, possible and within the scope of the present inventive concepts.

A rocker switch 120 can be arranged on the handle 112 in proximity to a user's thumb 31 to operate hydraulics or other mechanisms to raise and to lower the lift truck platform 60 during operation of the lift truck 50. The rocker switch 120 can be biased in a neutral position that maintains the current height of the platform 60. Pressing one portion (e.g., an upper portion) 120a of the switch 120 can raise the platform 60, and pressing another portion (e.g., a lower portion) 120b of the switch 120 can lower the platform 60. By arranging the rocker switch 120 on the handle 110 in proximity to a user's thumb 31 (or other finger), the raising and lowering functions can be performed simultaneously with the forward or rearward driving operations of the lift truck 50 using only one hand 22. Moreover, the horn button 118 can also be pressed simultaneously with forward/rearward driving operations.

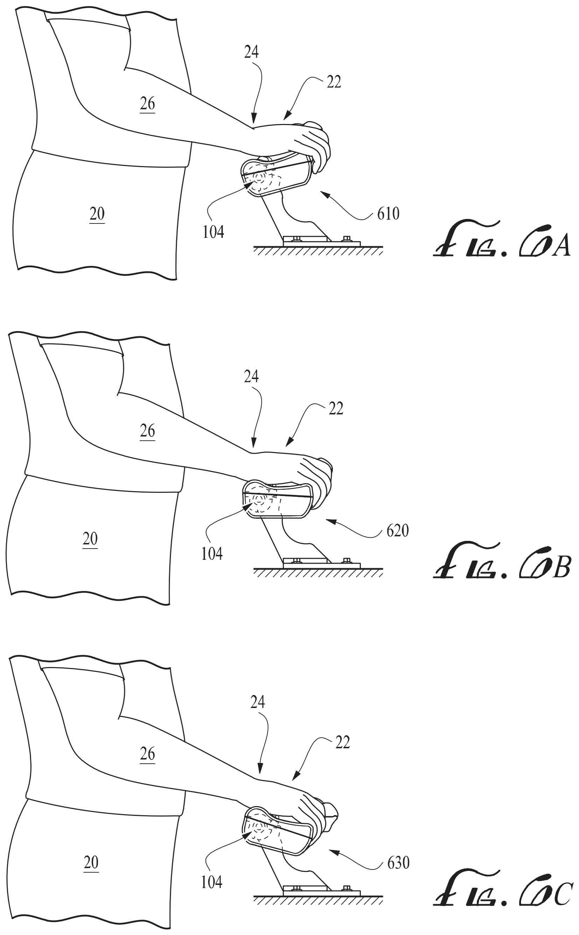

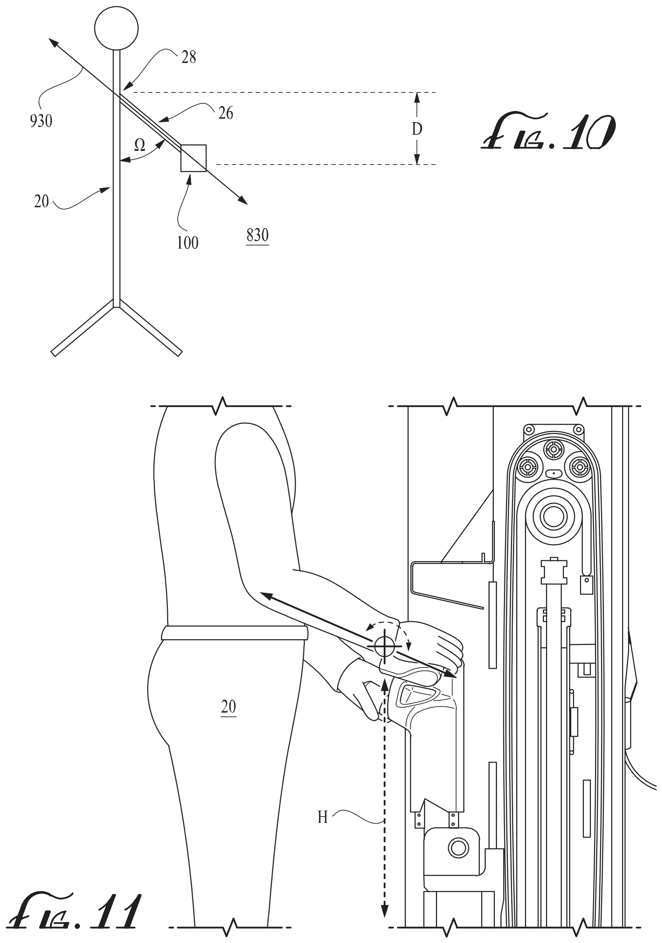

Figures 6A-6C are isometric illustrations showing a user 20 positioning the operator control device 100 of Figures 3A-3C in various operating positions. Referring now additionally to Figures 6A-6C, the pivot point 104 can be arranged so as to be substantially directly below a user's wrist 24 when the user 20 places his/her hand 22 on the handle 110. As discussed in further detail below, the pivot point 104 is preferably located such that bracing forces are vectored through the hand 22 and/or arm 26 of the user 20 substantially orthogonally to the axis of rotation of the pivot point 104 to provide dynamic stability while throttling (accelerating, braking, and reversing). The pivot point 104 allows for dynamic motion and proper ergonomics while providing a consistent-feeling, that is, substantially non-moving, point of contact with the truck 50 for stability to the operator 20. The height H (see Figures 10-11) of the handle 110 is preferably selected so as to maintain the user's arm 26 at a comfortable resting angle Ω. The height H may, for example, be approximately 965 mm from a floor of the platform 60.

In operation, bending of the hand 22 downward to straighten the user's wrist 24 rotates the handle 110 clockwise (from the vantage as shown in Figures 6A-7) about the pivot point 104 and positions the handle 110 in a forward operating position 630 which activates a forward operation of the lift truck 50. The speed of forward movement can be controlled by the amount (angle α - Fig. 3C) by which the handle 110 is rotated about the pivot point 104. The greater the angle α of rotation, the greater the speed. Relaxing the wrist 24 permits the biasing mechanism 106 to move the handle 110 back to a neutral position 620 in which a desired neutral position operation is performed. For example, the drive command may be stopped permitting the lift truck 50 to gradually regen to a stop as parameterized by the truck settings, the lift truck 50 may be permitted to coast, or the current operation of the lift truck 50 may be maintained. Cupping the wrist 24 pivots the handle 110 counterclockwise around the pivot point 104 to a reverse position 610 which drives a plugging or stopping operation to stop (if the lift truck 50 is traveling in a forward direction) and then reverse operation of the lift truck 50. The greater the angle β of rotation, the greater the stopping (plugging) force and then reversing speed. Relaxing the wrist 24 permits the biasing member 106 to move the handle 110 back to the neutral position 620. Likewise, if the lift truck 50 is traveling in a reverse direction, rotating the handle 110 to a forward drive position 610 drives a plugging or stopping operation and then forward operation of the lift truck 50.

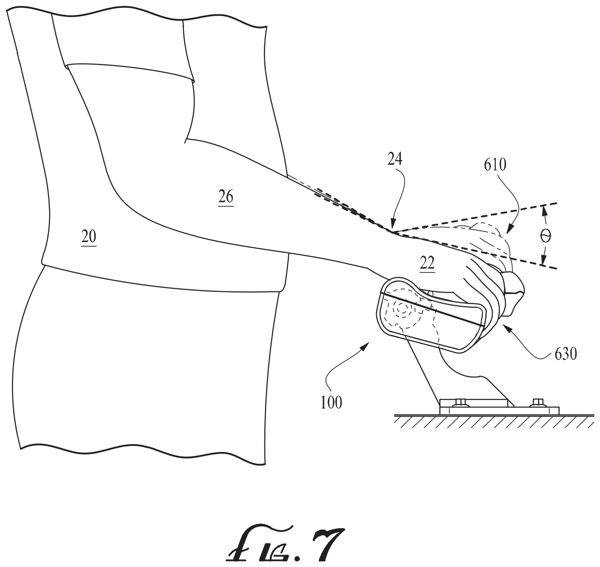

Figure 7 is a side view of an operator 20 using the operator control device 100 and illustrating the wrist movement between a forward operating position 630 and a stopping or reversing operating position 610. Referring additionally to Figure 7, to go from a fully forward operating position 630 to a fully reversed operating position 610, the operator's wrist 24 need only bend by an angle θ. In one embodiment, the angle θ may be approximately 30 degrees or less. Furthermore, in a fully forward operating position 630, the wrist is kept straight (neutral). By minimizing the wrist flex needed to operate the operator control device 100 and maintaining a neutral wrist position for forward truck movement, wrist stresses such as those that cause carpal tunnel syndrome can be reduced, perhaps significantly.

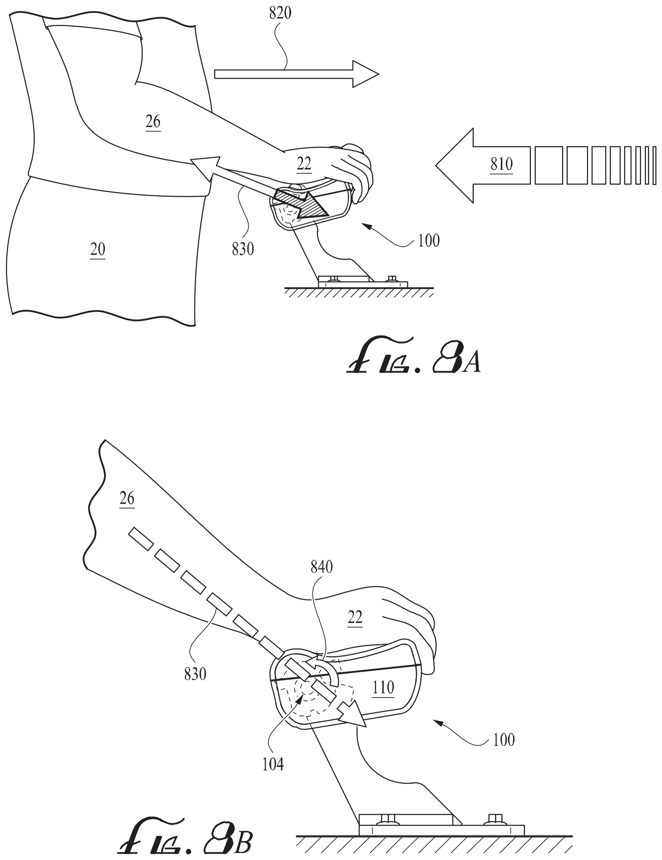

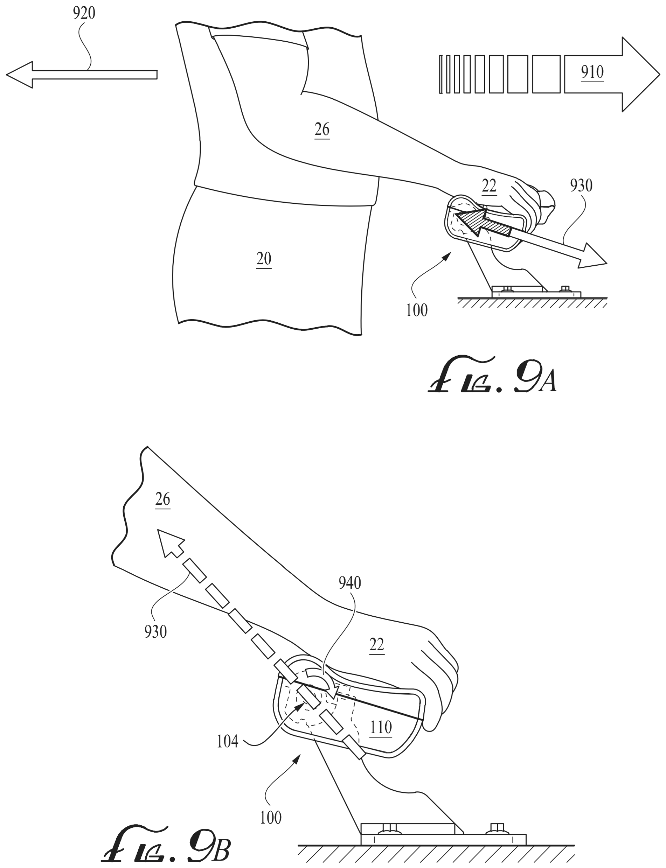

Figures 8A and 8B illustrate various forces operating on a user 20 during a stopping (plugging) or reverse operation of the lift truck 50, while Figures 9A and 9B illustrate various forces operating on a user 20 during a forward operation of the lift truck 50. Referring now additionally to Figures 8A-9B, the dynamic stability provided by the principles taught herein will be described in further detail.

As illustrated in Figures 8A and 8B, for instance, during a stopping or reversing operation, as the truck 50 slows or reverses, an operator's body reaction (represented by arrow 820) is to move forward in opposition to the stopping motion (truck deceleration, represented by arrow 810) of the vehicle 50. According to principles of the present inventive concepts, however, the operator control device 100 is designed and arranged to provide dynamic stability to the operator 20 during these operations. The location of the operator control device 100 is fixed such that it does not move forward or rearward or upward or downwards in relation to the truck 50. The operator control device 100 thereby provides a brace for resisting the stopping force 810 using the operator's large shoulder muscle group. Specifically, as the vehicle 50 slows and reverses, the operator 20 can push against the operator control device 100 with his or her hand 22 (in some examples, primarily through the palm of the hand 22) to provide a bracing force (represented by arrow 830) in opposition to the stopping force 810. As illustrated in Figure 8B, as the handle 110 is rotated counterclockwise (represented by arrow 840) around the pivot point 104 to perform the stopping/reversing operation, the push force and bracing force 830 are directed substantially orthogonally through the pivot point 104 of the horizontally and vertically fixed handle 110 to stabilize the truck operator 20. This bracing force 830 does not cause the operator's body weight to exert a rotational force on the operator control device 100 that would cause an unintended operation (e.g., acceleration, deceleration, raising, lowering).

Similarly, as illustrated in Figures 9A and 9B, when the wrist 24 is straightened, the handle 110 is rotated clockwise (represented by arrow 940) around the pivot point 104 and the truck 50 is driven forward. The truck acceleration (represented by arrow 910) causes an operator's body reaction (represented by arrow 920) in the opposite direction. The operator's instinct is to pull on the handle 110 of the operator control device 100 to steady himself or herself. The hand pull creates a bracing force (represented by arrow 930) that steadies the operator 20. The pull force and bracing force 930 is directed substantially orthogonally through the pivot point 104 of the horizontally and vertically fixed handle 110 to stabilize the truck operator 20 during the dynamic truck movements, for example, by not imparting a rotational force on the handle 110.

Figure 10 is a schematic illustration of an operator 20 using the operator control device 100 according to principles described herein. Referring to Figure 10, the operator control device 100 can be arranged so that the operator's arm 26 can be maintained at a desirable arm angle Ω and at a desired vertical distance D between shoulder and hand. The push 830 and pull forces 930 can be directed through the operator's shoulder 28 muscles so that large muscle groups can do a majority of the work of stabilizing the operator 20 to reduce strain on the operator 20 during truck 50 operation.

Figure 11 is a somewhat schematic illustration showing the location of the operator control device 100 within a man-up lift truck 50 according to one embodiment. Referring to Figure 11, the operator control device 100 can be arranged at a predetermined height H from the platform 60 so as to provide the desired arm angle Ω for the average user. The height H could also be made adjustable to more comfortably accommodate operators 20 of various heights.

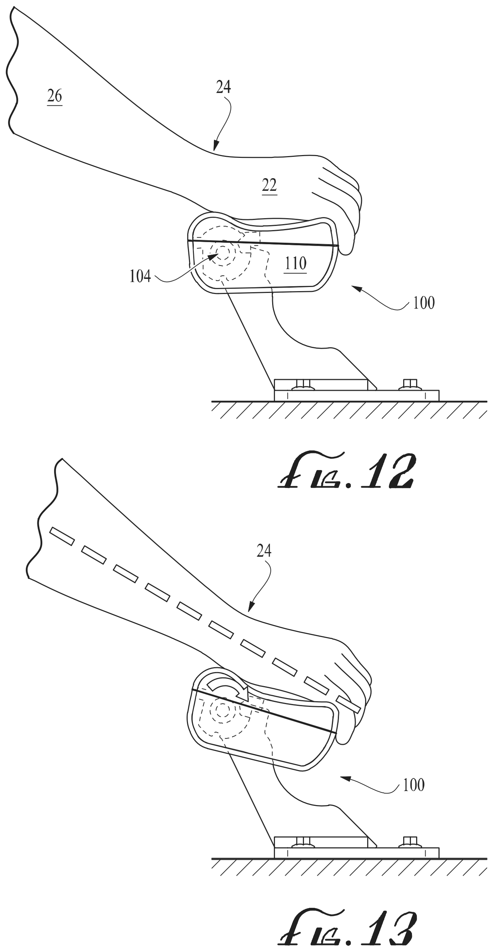

Figures 12-14 provide various illustrations summarizing various benefits of the embodiments described herein. Figure 12 is a side view illustrating the location of a pivot point 104 in relation to a user's hand 22 and wrist 24 with the operator control device 100 arranged in a neutral position. As shown in Figure 12, the operator control device 100 is designed and arranged such that a pivot point 104 for rotation of the handle 110 is arranged substantially directly below the user's wrist 24. The location of the operator control device is fixed so that its horizontal and vertical position remains substantially constant during operation of the truck 50. This arrangement permits operation of the operator control device 10 with minimal operator hand movement, reduces stress on the operator 20, and provides dynamic stability by allowing the operator 20 to steady himself or herself using the control device 100 without rotating the handle 110.

Figure 13 is a side view further illustrating the location of the pivot point 104 in relation to a user's hand 22 and wrist 24 in relation to the operator control device 100 arranged in a forward position. As shown in Figure 13, the truck 50 can be operated in a forward direction while the operator 20 maintains a neutral wrist position. This inhibits carpal tunnel issues and related or similar issues by reducing stress on the user's wrist 24. Furthermore, the fixed device 100 position permits a pull force to be directed through the pivot point 104 to a user's large shoulder muscles for stabilization. By utilizing the larger muscle groups, stress on the user 20 can be further reduced.

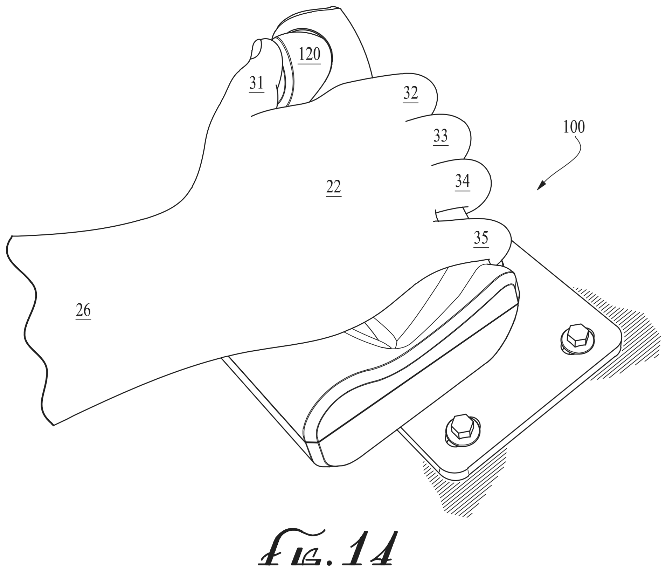

Figure 14 is an isometric illustration of the operator control device 100 indicating the location of thumb and finger controls 120, 116, 118 in relation to a user's hand 22 according to one embodiment. As shown in Figure 14, an operator 20 can simultaneously operate the throttle by rotating the handle 110 as described above and lift functions and horn functions of the man-up lift truck 50 using a single hand 22. For example, lift and lower functions can be operated by the thumb 31 operating control 120. As a further example, the thumb 31 may be used to activate an auxiliary button 116 located underneath the thumb pad in Figure 14 to control an auxiliary function such as turning lights on or off, or other suitable auxiliary function. And, finger 32 may be used to activate a horn button 118 located on the handle 110 underneath the finger 32 while the operator 20 is driving the lift truck 50. The operator control device 100 may provide convenient access to the lift functions, horn, and auxiliary control with a single hand 22 all while operating a throttle of the truck 50 to drive forward, stop, and reverse the truck 50. Other and/or additional control functions may be included and may be operated by the thumb 31, finger 32 or other suitable finger.

### Second Example Embodiment Illustrated in the Drawings

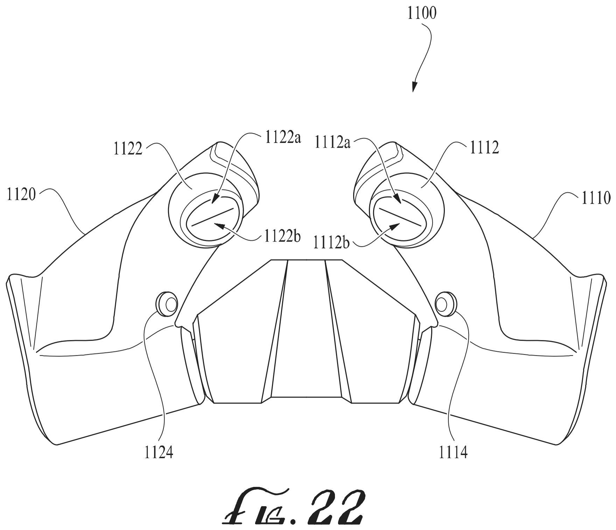

Figures 22-30 illustrate a second example embodiment.

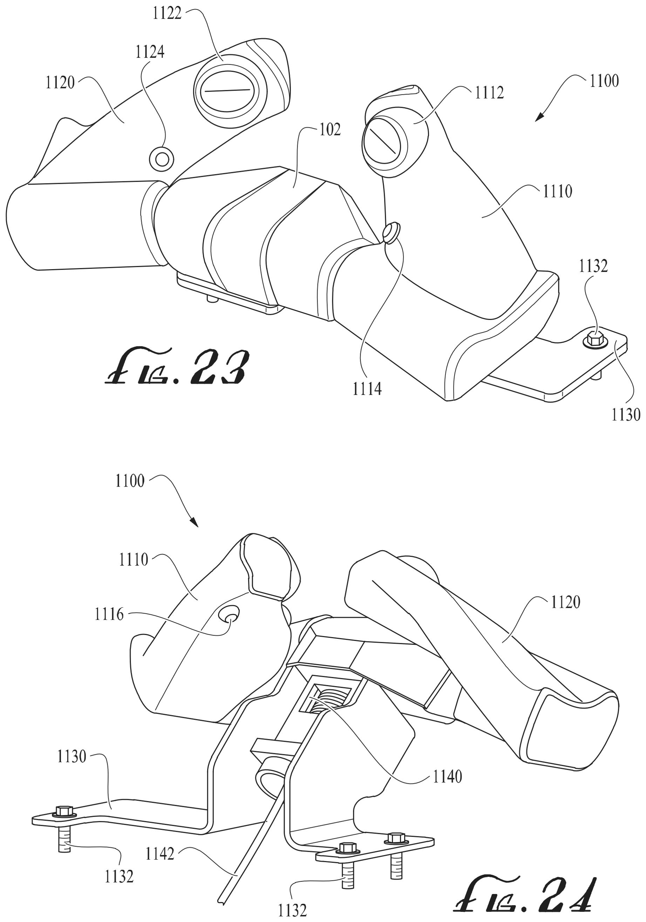

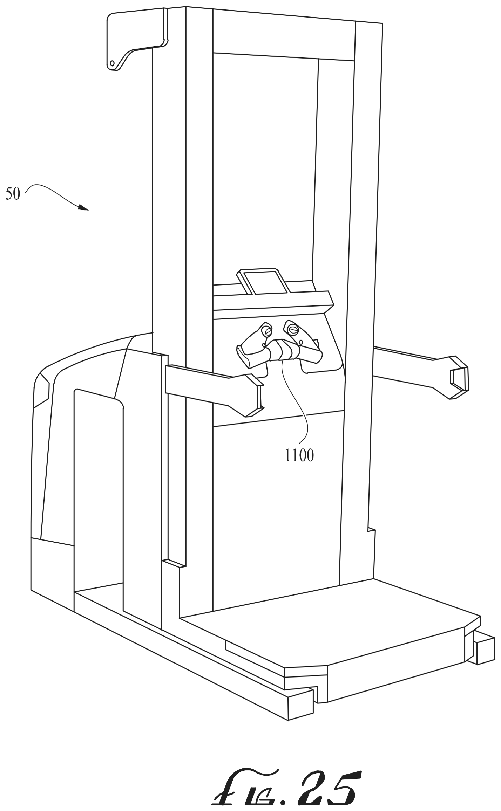

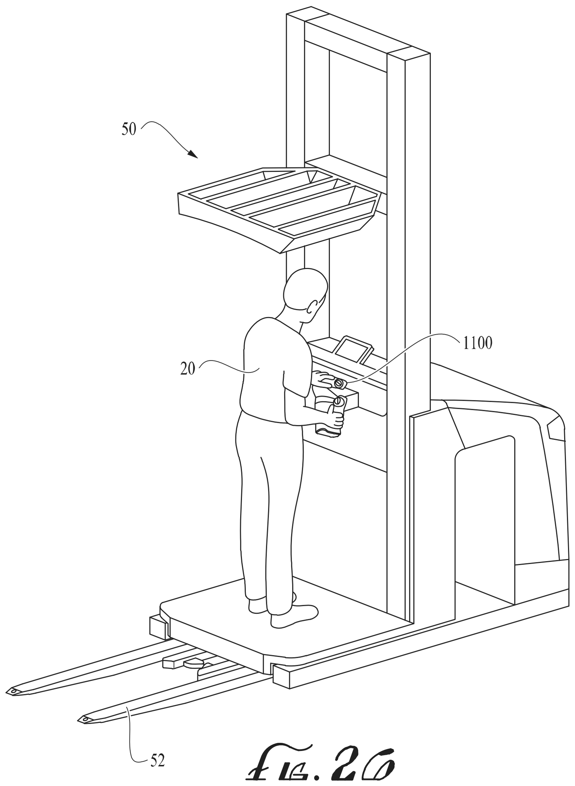

Figure 22 is a top front isometric view of a steering control handle 1100 for an order selector 50 (see Figure 4) according to one embodiment. Figure 23 is a right-front-top isometric view of the control handle 1100 of Figure 22. Figure 24 is a left-rear-bottom isometric view of the control handle 1100 of Figure 22. Figure 25 is a left-rear isometric view of an order selector 50 having the control handle 1100 of Figure 22. Figure 26 is a right-rear isometric view of an order selector 50 having the control handle 1100 of Figure 22.

Referring initially to Figures 22-26, a steering control handle 1100 for an order selector 50 includes two ergonomic handles 1110, 1120 for a user's right and left hands, respectively. The control handle 1100 is rotatably mounted on a support, such as a base 1130, and is permitted to rotate up to about 45 degrees in either direction (clockwise or counterclockwise) about a steering axis (or pivot point) 1104. An electrical steering system 1140 detects the direction and amount of rotation and outputs a corresponding steering input signal 1144 through a wire 1142 (or wirelessly). The control handle 1100 may be biased (such as by spring, magnet, or other forces) in a neutral position.

Multiple buttons (or switches, toggles, or other control input devices) 1112, 1114, 1116, 1122, 1124 are arranged on the handles 1110, 1120 to provide easy access to control functions of the order selector 50 without requiring the user to move or reposition his/her hands on the control handles 1110, 1120. A thumb switch 1112, for instance, can be provided on the right control handle 1110 to permit the user to control a speed of the vehicle 50 using his/her right thumb. Depressing the top section 1112a of the switch 1112 can cause the vehicle 50 to increase in speed (accelerate) in a forward direction, while pushing down on the lower section 1112b of the switch 1112 can cause the vehicle to slow down (decelerate or regen) and then reverse direction, then increase speed in a rearward direction. In other words, the thumb switch 1112 can be operated by the operator's thumb to operate a throttle function of the vehicle 50, wherein pushing on an upper portion 1112a of the thumb switch increases the vehicle speed in a forward direction or slows, stops, and reverses the vehicle 50 moving in a rearward direction and wherein pushing on a lower portion 1112b of the thumb switch slows, stops, or reverses the vehicle 50 moving in a forward direction and increases the speed of a vehicle 50 moving in a rearward direction.

A similar switch 1122 can be arranged on the left control handle 1120 to control a lift 52 of the order selector 50. Pushing down on the top portion 1122a of the switch 1122 can raise the forks 52 and pushing down on the bottom portion 1122b of the switch 1122 can lower the forks 52. Additional buttons 1114, 1116, 1124 can be arranged on the top and/or bottom sides of the control handles 1110, 1120 and provide control for a horn, turning wire guidance on/off, turning lights on/off, or other functions of the vehicle 50. The button operations can be customizable to a customer's or a user's specific preferences.

Arranging the primary vehicle controls within proximity to an operator's fingers while the operator's hands are arranged on the steering handles allows the operator to comfortably and safely access the vehicle's main controls without readjusting his/her hand positions. This therefore increases operator confidence and reduces fatigue. The comfortable, ergonomically shaped handles further increase operator confidence and reduce fatigue.

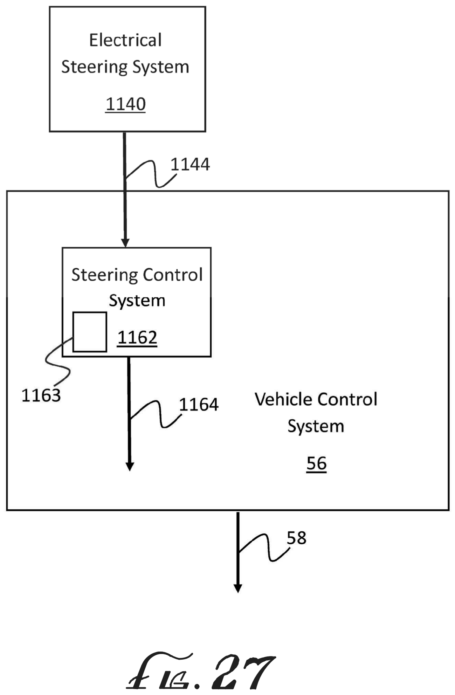

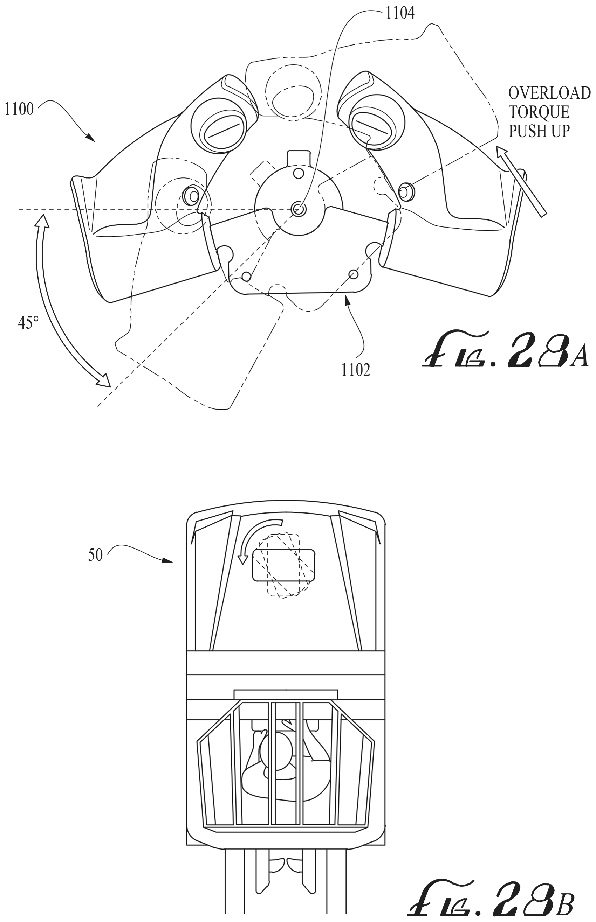

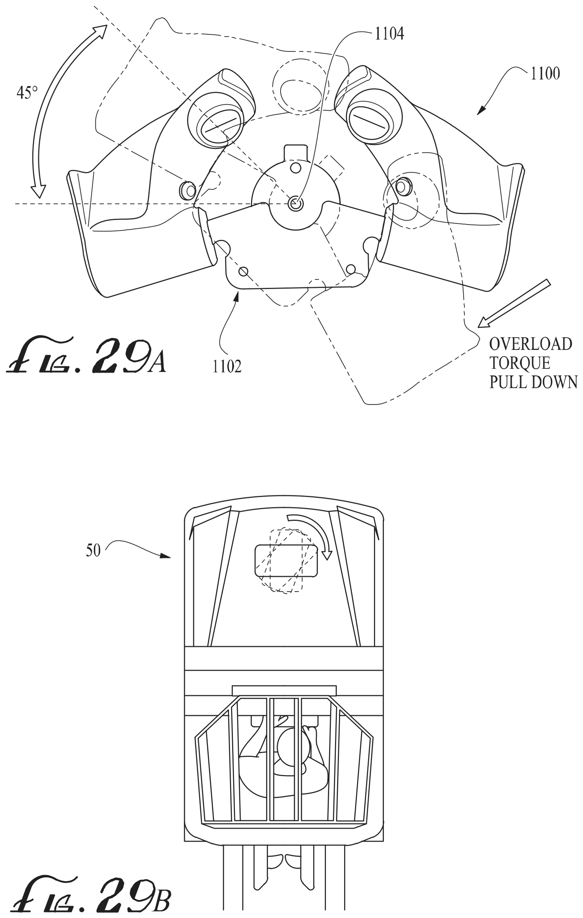

Figure 27 is a schematic block diagram of an electrical steering system 1140 and vehicle control system 56 according to one embodiment. Referring now additionally to Figure 27, the electrical steering system 1140 produces a steering input signal 1144 based on an amount of turn of the control handle 1100 about a steering axis 1104 (labeled in Figures 28A and 29A). The steering input signal 1144 is transmitted to a steering control system 1162 of the vehicle control system 56. The steering control system 1162 then determines an appropriate amount of vehicle 50 turn based on the steering input 1144 and other vehicle 50 operation factors. A steering output signal 1164 can be produced by the steering control system 1162 and provided to the vehicle control system 56. The vehicle control system 56 then controls the turning of the drive wheels in response to the steering input signal 1144 using a drive wheel control signal 58. Alternatively, the steering control system 1162 can generate the drive wheel control signal 58 directly. The drive wheel(s), whose steering angle is controlled by the drive control signal 58, may be powered or unpowered.

Figures 28A and 28B are a top view of a control handle 1100 and a top view of an order selector 50, respectively, illustrating a left-turn operation of an order selector 50 using the control handle 1100 of Figure 22, according to one embodiment. Figures 29A and 29B are a top view of a control handle 1100 and a top view of an order selector 50, respectively, illustrating a right-turn operation of an order selector 50 using the control handle 1100 of Figure 22, according to one embodiment.

Referring additionally to Figures 28A-29B, a yoke-style steering function can be provided to the vehicle 50 using the control handle 1100. This control style is sometimes referred to herein as "Fork-Lift Yoke Technology" or "FLYT" control. The FLYT control handle 1100 can be attached to the vehicle 50 by securing a base 1130 of the control handle to the vehicle 50. The control handle 1100 can be positioned at a height that provides the most ergonomic positioning for a standard operator 20 to reduce muscle strain in the operator's 20 hands, arms, and shoulders. The location of the control handle 1100 preferably provides strong, stable anchor points (particularly during acceleration, regen, and turning) that can improve operator 20 stability and confidence while operating the vehicle 50. By having one degree of freedom, the ability to rotate about the steering axis 1104 (which may be about a z-axis), but being restrained from movement in the other 5 degrees of movement, specifically, being restrained from translational movement along an x-axis, y-axis, and z-axis and restrained from rotational movement about the x-axis and the y-axis , the control handle 1100 is able to provide a strong, stable anchor point for an operator while a vehicle 50 moves.

A center portion 1102 of the control handle 1100 can be rotatably connected to the base 1130. The handles 1110, 1120 can be biased in a neutral position and permitted to rotate up to a limit, such as, for example, about 45 degrees clockwise (+45 degrees) and up to about 45 degrees counterclockwise (-45 degrees) around a steering axis 1104 to steer the vehicle 50. An electrical steering system 1140 can be provided to detect an amount of turn of the handles 1110, 1120. As the handles 1110, 1120 are turned, an electrical steering input signal 144 corresponding to the amount of handle turn is generated by the electrical steering system 1140 and sent to a steering control system 1162 of the vehicle control system 56, such as through a wire 1142. The amount of rotation of the vehicle 50 steering wheels and speed (rate at which such steering wheel rotation occurs) is determined and controlled by the steering control system 1162 based on the steering input signal 1144 and other factors (such as vehicle velocity, lift height, whether lift height is changing, load, etc.) to cause the vehicle 50 to turn. Using this "steer-by-wire" steering system, a steering input of between about -45 degrees to +45 degrees can be used to produce a vehicle turn of between about - 90 degrees to +90 degrees using a variable output steering function. One example of the variable output steering function will now be described in greater detail.

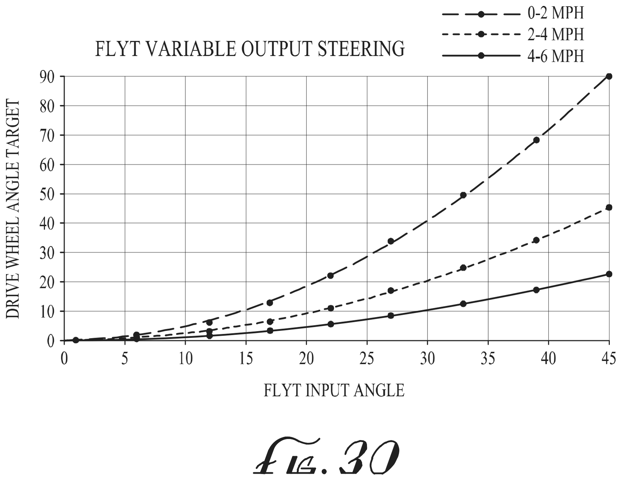

Figure 30 is a graph illustrating a variable output steering function for the steering control system 1162 that varies depending on a travel speed of the order selector 50 and an amount of turn of the steering control handle 1100, according to one embodiment. Referring now additionally to Figure 30, the amount of turn of the vehicle 50 can be dependent on additional factors, including, for example a speed (which may comprise the vehicle's velocity, acceleration, or a combination of both) of the vehicle 50. As shown in Figure 30, a speed of the vehicle 50 can be used to determine a desired amount of turn (drive wheel angle target) based on the steering input (FLYT input angle). At slower vehicle 50 speeds, the amount of vehicle 50 turn corresponding to the steering input signal 1144 can be greater than the amount of turn based on the same steering input signal 1144 at higher vehicle 50 speeds. For example, at a vehicle speed of 0-2 mph, a steering input of about 45 degrees can result in a vehicle turn of about 90 degrees. At 2-4 mph, the same steering input of about 45 degrees only produces a vehicle 50 turn of about 45 degrees. Furthermore, at 4-6 mph, the 45 degree steering input only produces a vehicle turn of about 22.5 degrees. Of course, the steering control system 1162 can be configured to control and manipulate the relationship between the steering input and the vehicle 50 turn according to any desired conditions or variables.

In this way, the drive wheel angle is a function of (or based on, in response to, or in accordance with, etc.) one or more variables in addition to the angle of the FLYT (or other operator-actuated steering control). Figure 30 illustrates vehicle speed as one such additional variable by illustrating a family of FLYT-input-angle-versus-drive-wheel-angle curves, but other additional variables, such as, for example, lift height or load weight, can be used instead of or in addition to vehicle speed. In one example, the amount of drive-wheel angle and the rate at which the drive-wheel angle changes may decrease as lift height increases, or as load weight increases, or both increase; and the amount of drive-wheel angle and the rate at which the drive-wheel angle changes may increase as lift height decreases, or as load weight decreases, or both decrease.

As further illustrated by the graph in Figure 30, the amount of vehicle 50 turn in relationship to the degree of steering input may increase in a non-linear relationship. More specifically, a greater turn of the handle 1100 results in a non-proportionally (e.g., greater than proportional) greater vehicle 50 turn, while smaller turns of the steering control handle 1100 result in non-proportionally smaller vehicle 50 turns. This can provide a more intuitive and natural feeling response to the vehicle 50 operator 20. For instance, at a vehicle 50 speed of 0-2 mph, an approximately 15 degree steering input only results in about a 10 degree vehicle 50 turn, while an approximately 25 degree input results in about a 30 degree vehicle turn, and an approximately 45 degree input results in about a 90 degree vehicle 50 turn. Of course, the relationships between the degree of steering input from the control handle 1100 to the amount of vehicle 50 turn can be adjusted in any desirable way.

According to other embodiments, fork 52 height, load amounts, and/or other factors can be used to directly or indirectly limit the steering response function. For instance, increased fork 52 height can limit an operational speed of a vehicle 50 and therefore indirectly control a turn response of the vehicle 50. Alternatively, fork 52 height can be used to directly affect a turn response of the vehicle 50 by limiting the turn response in relationship to increased fork 52 heights.

According to another embodiment, excessive steering inputs 1144 could cause an order selector to reduce vehicle 50 speed. Once the speed has been reduced to an appropriate level for the steering input 1144, the vehicle 50 can then be permitted to turn by the full amount according to the steering input 1144.

According to one embodiment, the vehicle control system 56 can be provided with customizable configuration files to allow customization for individual customers. This customization can, for instance, include one or more variable output steering control tables 1163 to control the turning characteristics of the vehicle 50 based on different operating parameters. Customization files, such as configuration files, could be used in the vehicle control system 56 to adjust the variable steering characteristics based on different factors and in different amounts based on individual customer needs or preferences.

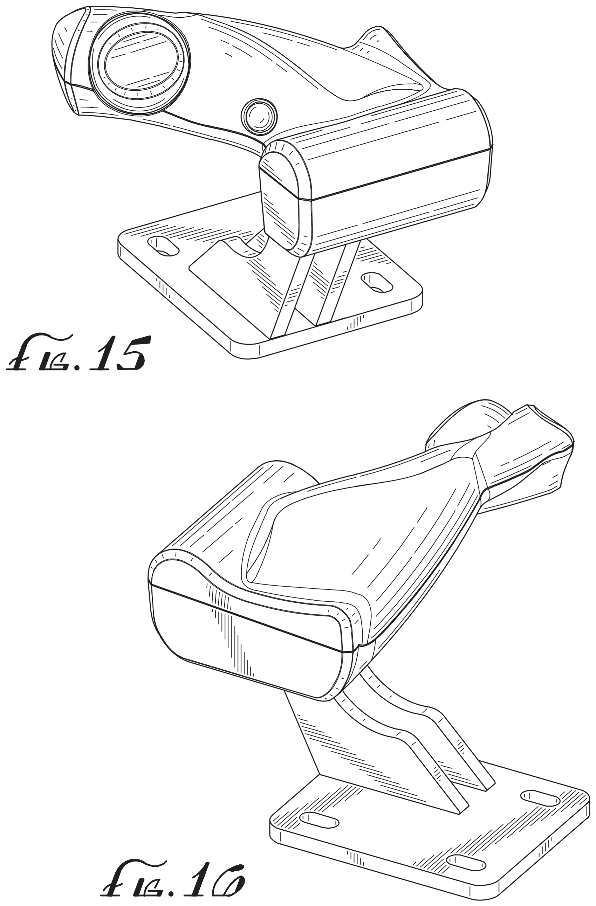

As described above, a control handle using the FLYT control described herein provides numerous benefits. The ergonomic shape of the right and left handles can be similar to that shown in Figures 15-21 and offers similar benefits to those described with respect thereto. This handle design can provide comfort, operator controls, and power positioning. Incorporating this design into a yoke-style control handle as described in this embodiment further provides intuitive steering control which minimizes operator training and adjustment period, thereby quickly increasing operator confidence, performance, and efficiency. The arrangement of the control handle in the vehicle along with the control handle design itself can provide stable and reliable operation. More specifically, the design and location of these operator controls provide strong stable anchor points which maximizes operator stability and confidence when using the truck. The arrangement of control features within easy operator access further provides effortless simultaneous controls of the truck's operations. Positioning control features on the handles allows the operator to comfortably and safely access the vehicle's main controls without readjusting hand positions, thus increasing operator confidence and reducing fatigue. The ergonomic design can enhance productivity, which allows the operator to be as efficient and productive at the end of the shift as they were at the beginning.

Various control characteristics are enabled by this control design. The yoke-style control design means that about a -45⁰ to +45⁰ steering input can be used to steer the truck output between about -90° to +90°. The "steer-by-wire" system allows for variable steering control that can be speed dependent, lift height dependent, and dependent on other vehicle operational factors, as desired. The variable speed control can use a non-linear input-to-output relationship to provide increased operational stability, comfort, and control. The hand-shape ergonomics and hand/arm-position ergonomics provide additional comfort and confidence. The handle located control features provide simultaneous functionality without hand adjustment, including, for instance, control over speed, steering, traction, hoist control, and a horn. Auxiliary functions can also be included, such as a lift limit, wire guidance activation, as well as other functions and customer specific requests.

The steering control logic itself can provide a variable output steering control that produces a speed-dependent, weight-dependent, height-dependent, and/or non-linear output. The control logic can also provide sensitivity reduction at low angles as well as maximum outputs at higher speeds. Fork height-dependent steer restrictions can also be implemented along with limits or controls based on any other desired operational factors.

### CONCLUSION

The terms and descriptions used above are set forth by way of illustration and example only and are not meant as limitations. Those skilled in the art will recognize that many variations, enhancements, and modifications of the concepts described herein are possible without departing from the underlying principles of the invention. For example, skilled persons will appreciate that the subject matter of any sentence or paragraph can be combined with subject matter of some or all of the other sentences or paragraphs, except where such combinations are mutually exclusive. The scope of the invention should therefore be determined only by the following claims, claims presented in continuation or reissue patent applications, and equivalents to the foregoing claims.
**1.** An operator control device for a materials-handling vehicle, said operator control device comprising:
   a handle pivotably arranged on a support structure so as to pivot about a pivot point, wherein said support structure is configured to be secured to the vehicle such that a horizontal and a vertical position of the pivot point is substantially fixed with respect to the lift truck during operation of the vehicle, wherein movement of the handle around the pivot point is the only movement of the handle permitted by the arrangement of the handle on the support structure;
   the handle comprising left and right handle portions, wherein each of the left and right handle portions comprises an upper surface contoured to ergonomically support a hand of an operator; and
   one or more vehicle control features arranged on the handle such that all of the vehicle control features are within reach of an operator's fingers or thumbs while the operator's hands remain on the ergonomic upper surfaces of the handle.
**2.** An operator control device according to clause 1, wherein each of the left and right handles comprises one or more of the vehicle control features configured to control different vehicle operations from the one or more vehicle control features located on the other one of the left and right handles.
**3.** An operator control device according to clause 1, wherein the rotation of the handle about the pivot point is configured to steer the vehicle.
**4.** An operator control device according to clause 1, wherein the one or more operations of the vehicle are selected from the group comprising: a throttle operation, a lift operation, a horn operation, an auxiliary function.
**5.** An operator control device according to clause 4, further comprising:
   a thumb switch configured to be operated by the operator's thumb to operate a lift function of the vehicle, wherein pushing on an upper portion of the thumb switch raises the lift and wherein pushing on a lower portion of the thumb switch lowers the lift.
**6.** An operator control device according to clause 4, further comprising:
   a thumb switch configured to be operated by the operator's thumb to operate a throttle function of the vehicle, wherein pushing on an upper portion of the thumb switch increases the vehicle speed in a forward direction or slows, stops, and reverses the vehicle moving in a rearward direction and wherein pushing on a lower portion of the thumb switch slows, stops, or reverses the vehicle moving in a forward direction and increases the speed of a vehicle moving in a rearward direction.
**7.** An operator control device according to clause 5, wherein the thumb switch can be operated to control the lift function while the vehicle is being operated in a forward or reverse direction.
**8.** An operator control device according to clause 1, wherein the handle is biased in a neutral position.
**9.** An operator control device according to clause 1, wherein the handle can be rotated counterclockwise about the pivot point to initiate a left-turn operation of the vehicle and wherein the handle can be rotated clockwise about the pivot point to initiate a right-turn operation of the vehicle.
**10.** An operator control device according to clause 9, wherein the handle is configured to pivot up to approximately about 45 degrees in a clockwise direction and up to approximately about 45 degrees in a counter-clockwise direction about the pivot point.
**11.** An operator control device according to clause 10, wherein a speed of a turning operation of the vehicle is varied in a non-linear relationship based on an amount by which the handle is rotated about the pivot point.
**12.** An operator control device according to clause 1, wherein the handle is configured to direct bracing forces to stabilize the operator during movement of the lift truck through the handle upper surfaces and through both arms and large muscle groups of the operator's torso.
**13.** A method of controlling throttle, lift, and steering operations of a man-up lift truck using an operator control device, the method comprising:
   supporting an operator's hands in a driving position on the operator control device;
   in response to a rotation force imparted by the operator's hands, rotating the handle of the operator control device about a pivot point that is fixed in relation to the man-up lift truck to steer the vehicle in a direction of rotation of the operator control device;
   controlling a throttle operation of the vehicle in response to a force by an operator's thumb on a first thumb switch arranged on the operator control device, wherein the first thumb switch is arranged in a position that it can be operated by the operator without the operator removing his/her hands from the driving position on the operator control device; and
   controlling a lift operation of the vehicle in response to a force by an operator's thumb on a second thumb switch arranged on the operator control device, wherein the second thumb switch is arranged in a position that it can be operated by the operator without the operator removing his/her hands from the driving position on the operator control device.
**14.** A method according to clause 13, wherein the operator control device comprises a left and right handle each configured to support a hand of an operator.
**15.** A method according to clause 14, wherein the first thumb switch is located on either the left or right handle of the operator control device and where the second thumb switch is located on the opposite left or right handle.
**16.** A method according to clause 13, wherein the operator control device provides dynamic stability to the operator by permitting the operator to use the handle to provide a bracing force during forward, stopping, and reversing operations of the lift truck.
**17.** A method according to clause 16, wherein the bracing force does not cause the operator control device to move.
**18.** A method according to clause 16, wherein the bracing force travels through an arm and large muscle group of the operator.
**19.** A method according to clause 13, further comprising:
   turning the vehicle in a non-proportional relationship to the amount by which the operator control device is rotated about the pivot point.
**20.** A materials-handling vehicle comprising:
   a lift configured to move up and down to enable picking and placing loads at various heights;
   an operator control device arranged in a control panel and configured to control throttle and lift operations of the vehicle;
   the operator control device comprising a handle arranged on a support in a manner that permits the handle to rotate about a pivot point, wherein the support is rigidly affixed to the vehicle in a manner that maintains the pivot point in a fixed position with respect to the vehicle during operation of the vehicle; and
   one or more control features arranged on the handle to control one or more operations of the vehicle, wherein the one or more control features are configured to be operated by a finger or thumb of the operator without requiring movement of an operator's hand from an operating position on the operator control device;
   wherein rotating the handle about the pivot point initiates an operation of the vehicle.
**21.** A materials-handling vehicle according to clause 20, wherein the handle comprises an upper surface configured to ergonomically support a hand of an operator.
**22.** A materials-handling vehicle according to clause 21, wherein the handle provides dynamic stability to the operator by permitting the operator to use the handle to provide a bracing force during forward, plugging, and reverse operations of the vehicle, wherein the bracing force is configured to be activated by a large muscle group of the operator.
**23.** A materials-handling vehicle according to clause 21, wherein rotating the handle initiates a turning operation of the vehicle.
**24.** A materials-handling vehicle according to clause 21, wherein the one or more control features of the operator control device comprises a thumb switch configured to be actuated by an operator's thumb to raise and lower the lift.
**25.** A materials-handling vehicle according to clause 21, wherein the one or more control features of the operator control device comprises a thumb switch configured to be actuated by an operator's thumb to control a speed of the vehicle.
**26.** An operator control device for a materials-handling vehicle, said control device comprising:
   a yoke-style steering device rotatably arranged on a support structure so as to rotate about a steering axis, wherein said support structure is configured to be secured to the vehicle, the yoke-style steering device comprising ergonomic left and right handles, each comprising an upper surface contoured to support a hand of an operator; and
   an electrical steering system configured to produce a steering input signal based on an amount by which the yoke-style steering device is rotated about the steering axis, wherein the steering input signal is configured to be sent to a vehicle control system to control an amount of vehicle turn based on the steering input signal.
**27.** An operator control device according to clause 26, further comprising:
   a thumb switch arranged on either the left or right handle to be operated by a thumb of the operator without requiring movement of an operator's hand from an operating position on the control device, wherein the thumb switch is configured to operate a lift function of the vehicle, wherein pushing on an upper portion of the thumb switch raises the lift and wherein pushing on a lower portion of the thumb switch lowers the lift.
**28.** An operator control device according to clause 26, further comprising:
   a thumb switch arranged on either the left or right handle to be operated by a thumb of the operator without requiring movement of an operator's hand from an operating position on the control device, wherein the thumb switch is configured to control a speed of the vehicle.
**29.** An operator control device according to clause 26, wherein the handle provides dynamic stability to the operator by permitting the operator to use the handle to provide a bracing force during forward, plugging, and reverse operations of the vehicle.
**30.** An operator control device according to clause 26, wherein the bracing force is directed through the handle and through an arm and large muscle groups of the operator.

## Claims

1. An operator control device (1100) for a materials-handling vehicle (50), said operator control device (1100) comprising:
a handle (1100) pivotably arranged on a support structure (1130) so as to pivot about a pivot point (1104), wherein said support structure (1130) is configured to be secured to the vehicle (50) such that a horizontal and a vertical position of the pivot point is substantially fixed with respect to the vehicle (50) during operation of the vehicle (50), wherein movement of the handle (1110) around the pivot point (1104) is the only movement of the handle (1110) permitted by the arrangement of the handle (1110) on the support structure (1130);
the handle (1100) comprising left and right handle portions (1120, 1110), wherein each of the left and right handle portions (1120, 110) comprises an upper surface (114) contoured to ergonomically support a hand (22) of an operator (20); and
one or more vehicle control features (1112, 1114, 1116, 1122, 1124) arranged on the handle (1100) such that all of the vehicle control features (1112, 1114, 1116, 1122, 1124) are within reach of an operator's fingers (32, 33, 34, 35) or thumbs (31) while the operator's hands (22) remain on the ergonomic upper surfaces (114) of the handle (1100).

2. An operator control device (1100) according to claim 1, wherein each of the left and right handle portions (1120, 1110) comprises one or more of the vehicle control features (1112, 1114, 1116, 1122, 1124) configured to control different vehicle operations from the one or more vehicle control features (1112, 1114, 1116, 1122, 1124) located on the other one of the left and right handle portions (1120, 110).

3. An operator control device (1100) according to any preceding claim, wherein the rotation of the handle (1100) about the pivot point (1104) is configured to steer the vehicle (50).

4. An operator control device (1100) according to any preceding claim, wherein the one or more operations of the vehicle (50) are selected from the group comprising: a throttle operation, a lift operation, a horn operation, and an auxiliary function.

5. An operator control device (1100) according to any preceding claim, further comprising:
a thumb switch (1112, 1122) configured to be operated by the operator's thumb (31) to operate a lift function of the vehicle (50), wherein pushing on an upper portion (112a, 1122a) of the thumb switch (1112, 1122) raises the lift (65) and wherein pushing on a lower portion (1112b, 1122b) of the thumb switch (1112, 1122) lowers the lift (65).

6. An operator control device (1100) according to any preceding claim, further comprising:
a thumb switch (1112, 1122) configured to be operated by the operator's thumb (31) to operate a throttle function of the vehicle (50), wherein pushing on an upper portion (1112a, 1122a) of the thumb switch (1112, 1122) increases the vehicle (50) speed in a forward direction or slows, stops, and reverses the vehicle (50) moving in a rearward direction and wherein pushing on a lower portion (1112b, 1122b) of the thumb switch (1112, 1122) slows, stops, or reverses the vehicle (50) moving in a forward direction and increases the speed of a vehicle (50) moving in a rearward direction.

7. An operator control device (1100) according to claim 5 or 6, wherein the thumb switch (1112, 1122) can be operated to control the lift function while the vehicle (50) is being operated in a forward or reverse direction.

8. An operator control device (1100) according to any preceding claim, wherein the handle (1100) is biased in a neutral position.

9. An operator control device (1100) according to any preceding claim, wherein the handle (1100) can be rotated counterclockwise about the pivot point (1104) to initiate a left-turn operation of the vehicle (50) and wherein the handle (1100) can be rotated clockwise about the pivot point (1104) to initiate a right-turn operation of the vehicle (50).

10. An operator control device (1100) according to claim 9, wherein the handle (1100) is configured to pivot up to approximately about 45 degrees in a clockwise direction and up to approximately about 45 degrees in a counter-clockwise direction about the pivot point (1104).

11. A method of controlling throttle, lift, and steering operations of a man-up lift truck (50) using an operator control device (1100), the method comprising:
supporting an operator's hands (22) in a driving position on the operator control device (1100);
in response to a rotation force imparted by the operator's hands (22), rotating the handle (1100) of the operator control device (1100) about a pivot point (1104) that is fixed in relation to the man-up lift truck (50) to steer the man-up lift truck (50) in a direction of rotation of the operator control device (1100);
controlling a throttle operation of the man-up lift truck (50) in response to a force by an operator's thumb (31) on a first thumb switch (1112, 1122) arranged on the operator control device (1100), wherein the first thumb switch (1112, 1122) is arranged in a position that it can be operated by the operator (20) without the operator (20) removing his/her hands (22) from the driving position on the operator control device (1100); and
controlling a lift operation of the man-up lift truck (50) in response to a force by an operator's thumb (31) on a second thumb switch (1112, 1122) arranged on the operator control device (1100), wherein the second thumb switch (1112, 1122) is arranged in a position that it can be operated by the operator (20) without the operator (20) removing his/her hands (22) from the driving position on the operator control device (1100).

12. A method according to claim 11, wherein the operator control device (1100) comprises a left and right handle (1120, 1110) each configured to support a hand (22) of an operator (20).

13. A method according to claim 11 or 12, wherein the first thumb switch (1112, 1122) is located on either the left or right handle (1120, 1110) of the operator control device (1100) and wherein the second thumb switch (1112, 1122) is located on the opposite left or right handle (1120, 1110).

14. A method according to any of claims 11 to 13, wherein the operator control device (1100) provides dynamic stability to the operator (20) by permitting the operator (20) to use the handle (1100) to provide a bracing force during forward, stopping, and reversing operations of the man-up lift truck (50).

15. A method according to any of claims 11 to 14, further comprising:
turning the man-up lift truck (50) in a non-proportional relationship to the amount by which the operator control device (1100) is rotated about the pivot point (1104).
